# EUROPÄISCHE PATENTSCHRIFT

(11) **EP 1 207 326 B1**
(45) Veröffentlichungstag und Bekanntmachung des Hinweises auf die Patenterteilung: **09.06.2004**
(21) Anmeldenummer: 01890318.7
(22) Anmeldetag: 14.11.2001
(51) Int. Cl.: F16K 3/26, F16K 31/02, F16K 31/122

(54) **Axial durchströmtes Hochdruckschschieberventil**
Axial flow high pressure sliding valve
Soupape haute pression à tiroir et à écoulement axiale

(30) Priorität: 15.11.2000 AT 84200 U
(43) Veröffentlichungstag der Anmeldung: 22.05.2002
(73) Patentinhaber: Hermeling, Werner, 7100 Neusiedl am See (AT)
(72) Erfinder: Hermeling, Werner, 7100 Neusiedl am See (AT)
(74) Vertreter: Haffner, Thomas M.

(56) Entgegenhaltungen:
- EP-A- 0 617 261
- WO-A-94/27069
- WO-A-99/08031

## Beschreibung

Die Erfindung bezieht sich auf ein axial durchströmtes Hochdruckschieberventil mit einem rohrförmigen Ventilkörper mit radialen Durchbrechungen für den Durchtritt von Medium in geöffneter Stellung des Ventiles, wobei der rohrförmige Ventilkörper in axialer Richtung verschiebbar in einem Gehäuse geführt ist.

Hochdruckventile sind in unterschiedlicher Ausbildung bekanntgeworden. Der DE 43 40 783 A1 ist beispielsweise ein Kupplungsnippel zur Herstellung einer druckdichten Verbindung zwischen einem Behälter bzw. einer Leitung und einem lösbar druckdicht anschließbaren Kupplungsteil zu entnehmen, welches einen durch Druckmedien aufdrückbaren Ventilkolben aufweist. Die Ausbildung ist hiebei auf Temperaturen zwischen -40° C und +120° C ausgelegt. Insbesondere in einem Temperaturbereich bis -200° C beim Transport von flüssigen technischen Gasen werden erhebliche Ansprüche an die Dichtungen gestellt. Für die Abfüllung von flüssigem Sauerstoff bedürfen Dichtungen eines besonderen Schutzes, um die Gefahr eines Abbrennens der Dichtungen zu verhindern, wobei weiters bei derartig tiefen Temperaturen aufgrund unterschiedlicher Materialausdehnungen Dichtheitsprobleme mit konventionellen Ausbildungen nicht ohne weiteres kontrolliert werden können. Derartige für sehr niedrige Temperaturen und insbesondere Temperaturen von flüssiger Luft oder flüssigem Sauerstoff ausgelegte Ventile sind daher in der Regel mit relativ aufwendigen Stellgliedern zum Öffnen und zum Schließen der Ventile ausgestattet.

Axial durchströmte Ventile sind als Schaltventile, beispielsweise der WO 99/08031 sowie als Rückschlagventile für Kupplungsnippel oder Fluidleitungen der WO 99/02907 zu entnehmen.

Die Erfindung zielt nun darauf ab, ein axial durchströmtes Hochdruckventil der eingangs genannten Art zu schaffen, mit welchem auch flüssige technische Gase und insbesondere flüssiger Sauerstoff gefahrlos und ohne Gefahr einer Zerstörung von Dichtungen abgefüllt werden kann.

Zur Lösung dieser Aufgabe besteht das erfindungsgemäße Ventil im wesentlichen darin, daß der Ventilkörper in axialem Abstand von dem die radialen Durchbrechungen tragenden Endbereich einen zur Achse symmetrisch angeordneten Ventilkegel mit konischer Dichtfläche trägt, daß der die radialen Durchbrechungen tragende Endbereich des rohrförmigen Ventilkörpers in eine Hülse mit geschlossenem Boden eintauchend geführt ist, wobei die Hülse an der dem Ventilkegel zugewandte Mantelstirnflächen einen konischen Ventilsitz trägt, welcher mit der konischen Dichtfläche des Ventilkegels zusammenwirkt, und daß die Dichtung zwischen dem Ventilkörper und dem Gehäuse als Balgdichtung ausgebildet ist. Bei einer derartigen Ausbildung wird der Ventilkörper vom Produkt umströmt bzw. durchströmt, wobei das Ventil axial angeströmt wird. Rotationssymmetrisch zum Ventilkörper ist die Dichtfläche vorgesehen, wobei das Medium über dem rohrförmigen und damit hohl ausgebildeten Ventilkörper über radiale Bohrungen austritt und in axialer Richtung abströmt. Dadurch, daß nun das die radialen Durchbrechungen tragende Ende des rohrförmigen Ventilkörpers in eine Hülse mit geschlossenem Boden eintauchend geführt ist, kann eine dosierte und entsprechend gedrosselte Öffnungs- und Schließbewegung durch Überschleifen dieser radialen Durchbrechungen an den Rändern der Hülse und damit eine Stoßbeanspruchung des Ventiles mit Sicherheit vermieden werden, wobei die Dichtwirkung von einem gesonderten. Ventilkegel bzw. dem mit diesem Ventilkegel zusammenwirkenden konischen Ventilsitz gewährleistet ist. Für einen derartigen dichtenden Sitz können übliche tieftemperaturfeste Werkstoffe zum Einsatz gelangen, wobei ein dichter Sitz auch dann gewährleistet ist, wenn der Ventilkörper aufgrund der tiefen Temperaturen thermisch kontrahiert bzw. Ventilkegel und Ventilsitz unterschiedliche Temperaturen aufweisen. Zum Unterschied von bei bekannten Ausbildungen vorgesehenen Gleitdichtungen wird unabhängig von gegebenenfalls auftretenden Temperaturgradienten in der Schließstellung ein sicherer und dichtender Verschluß gewährleistet, wobei dadurch, daß die Dichtung zwischen dem Ventilkörper und dem Gehäuse als Balgdichtung ausgebildet ist, eine derartige Dichtung unabhängig von unterschiedlichen thermischen Ausdehnungen von Gehäuse und Ventilkörper in jeder Phase der Bewegung des Ventilkörpers aufrechterhalten werden kann. Die bei bekannten Ausbildungen zwischen Ventilkörper und Gehäuse vorgesehenen Gleitdichtungen können aufgrund unterschiedlicher thermischer Belastung Probleme bereiten, welche durch die Verwendung von Balgdichtungen vermieden werden. Die Faltenbälge dichten hiebei den Ventilkörper gegenüber dem Gehäuse sicher ab, wobei weitere zwischen Gehäuse und Ventilkörper zwischengeschaltete, gegebenenfalls als Dichtelemente ausgebildete Elemente lediglich eine Führungsfunktion übernehmen. Während bei bekannten dichtenden Führungen im tiefkalten Bereich Taupunktsunterschreitungen möglich sind und damit die Gefahr besteht, daß im Bereich der Dichtungen Vereisungen auftreten, sind derartige Taupunktsunterschreitungen im Bereich der Führungen im vorliegenden Fall unkritisch, da diese Führungen nicht gleichzeitig dichten müssen. Die Dichtwirkung wird in jeder Phase von der Balgdichtung übernommen, sodaß Beeinträchtigungen auch bei Taupunktsunterschreitungen ausgeschlossen werden.

In besonders vorteilhafter Weise ist die Erfindung so ausgebildet, daß der Ventilkörper einen radialen Flansch für den Angriff eines, insbesondere fluidbetriebenen, Stellantriebes trägt. Mittels eines derartigen radialen Flansches, welcher selbst beispielsweise als Kolben ausgebildet sein kann und im Gehäuse geführt sein kann, läßt sich in einfacher Weise ein Fluidantrieb realisieren, wobei ein derartiger Fluidantrieb bei entsprechender Beaufschlagung des Flansches von beiden Seiten in alternierender Richtung betrieben werden kann. Es ist aber ohne weiteres auch möglich die Ausbildung so zu treffen, daß der Flansch unter Zwischenschaltung einer Feder am Gehäuse abgestützt ist, wodurch eine federnde Rückstellung in eine der beiden Lagen des Ventiles bei Entlastung der Fluidleitung des Stellantriebes ermöglicht wird. Um hier thermische Einflüsse zu minimieren und unerwünschte Taupunktsunterschreitungen zu eliminieren, ist mit Vorteil die Ausbildung so getroffen, daß der Flansch unter Zwischenschaltung eines thermischen Isolators mit dem Stellantrieb bzw. der Feder verbunden ist.

Die vollständige Abdichtung des Ventilkörpers relativ zum Gehäuse kann in einfacher Weise so ausgebildet sein, daß der Ventilkörper in axialer Richtung zu beiden Seiten des Flansches je eine dichtend mit dem Ventilkörper und dem Gehäuse verbundene Balgdichtung trägt, wobei vorzugsweise das Gehäuse im Bereich der Balgdichtungen Entlastungsbohrungen aufweist.

Um eine sichere axiale Führung des Ventilkörpers zu gewährleisten, ist mit Vorteil die Ausbildung so getroffen, daß zwischen dem Flansch und den Balgdichtungen im Gehäuse dichtende ringförmige Führungen für den Ventilkörper angeordnet sind.

Alternativ zu einer unmittelbaren Beaufschlagung des als Kolben ausgebildeten Flansches mit Fluid kann der Stellantrieb so ausgebildet sein, daß der Stellantrieb von zu beiden Seiten des Flansches wirkenden elektrochemischen Aktoren gebildet ist. Auf diese Weise gelingt es eine besonders schonende und gedämpfte Bewegung des Ventilkörpers auch bei hohen Mediendrücken sicherzustellen. Bei unmittelbarer Beaufschlagung des Flansches mit Fluid ist die Ausbildung mit Vorteil so getroffen, daß der Flansch dichtend in einer den Ventilkörper umgebenden Kammer geführt ist, an welche eine Fluidleitung zum axialen Verstellen des Ventilkörpers angeschlossen ist.

Die im wesentlichen topfförmig ausgebildete Hülse kann in einfacher Weise mit dem Gehäuse verbunden werden, wobei für einen entsprechenden axialen Durchtritt des Mediums bei geöffnetem Schieberventil Sorge getragen werden muß. Mit Vorteil ist hiebei die Ausbildung so getroffen, daß die Hülse mit geschlossenem Boden in einer mit dem Gehäuse verbundenen Scheibe angeordnet ist, welche radial außerhalb des Mantels der Hülse axiale Durchbrechungen aufweist.

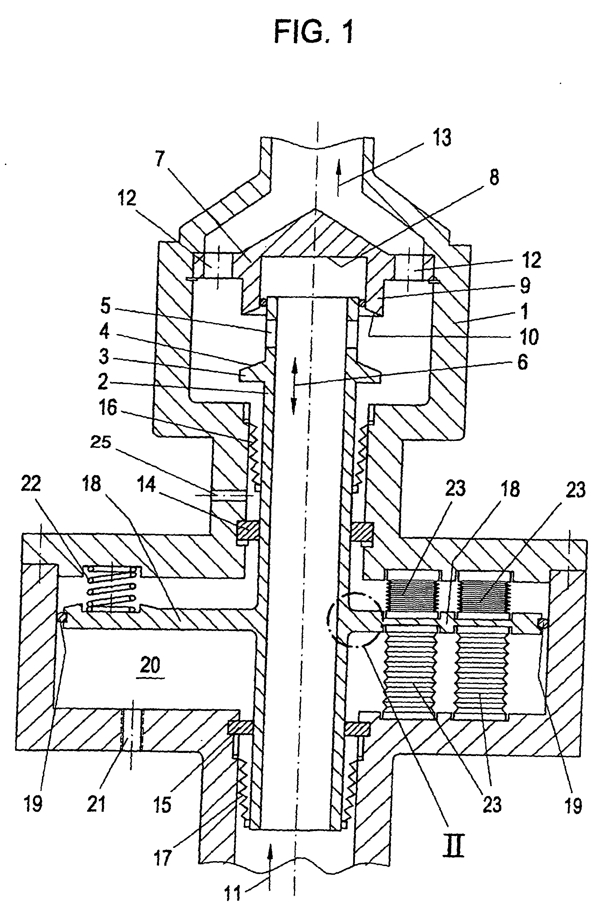

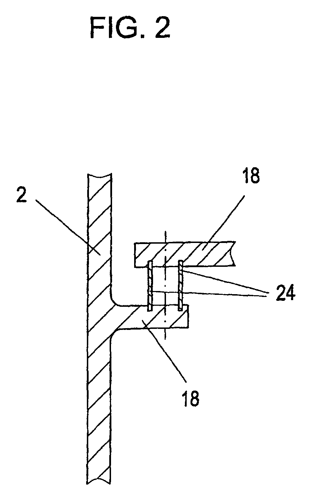

Die Erfindung wird nachfolgend anhand eines in der Zeichnung schematisch dargestellten Ausführungsbeispieles näher erläutert. In dieser zeigen Fig. 1 einen Axialschnitt durch ein erfindungsgemäßes Hochdruckschieberventil und Fig. 2 ein Detail entsprechend dem Pfeil II der Fig. 1.

In Fig. 1 ist mit 1 das Gehäuse eines Hochdruckschieberventiles bezeichnet, dessen Ventilkörper 2 als rohrförmiger Ventilkörper ausgebildet ist. Der Ventilkörper 2 trägt einen radialen flanschartigen Fortsatz 3, welcher an seiner Stirnfläche 4 einen Ventilkegel ausbildet. Der Ventilkörper 2 weist weiters radiale Durchbrechungen 5 auf, welche bei axialer Verschiebung des Ventilkörpers in Richtung des Doppelpfeiles 6 in eine Hülse 7 eintauchen. Die Hülse weist einen geschlossenen Boden 8 und einen Mantel 9 auf, dessen dem Dichtkegel 4 zugewandte Stirnflächen 10 als Ventilsitzflächen ausgebildet sind. Bei axialer Verschiebung des Ventilkörpers in Richtung des Doppelpfeiles 6 können somit die konische Dichtfläche des Ventilkegels 4 und die Sitzfläche 10 in dichtenden Kontakt gebracht werden, wobei in dieser eingeschobenen Position die radialen Durchbrechungen 5 von den Kanten des Mantels 9 der Hülse 7 überschliffen sind.

Flüssiges oder gasförmiges unter hohem Druck stehendes Medium gelangt über den nicht näher dargestellten Anschluß in axialer Richtung zum Ventil, wobei die Einlaßrichtung mit 11 bezeichnet ist. In der in Fig. 1 dargestellten geöffneten Position des Ventiles tritt das Medium durch den rohrförmigen Hohlraum des Ventilkörpers hindurch und kann über die radialen Durchbrechungen und nachfolgende axiale Durchbrechungen 12 in Richtung des Pfeiles 13 wiederum abströmen.

Der rohrförmige Ventilkörper 2 ist über Führungselemente 14 und 15 im Gehäuse geführt, wobei zwischen Gehäuse 1 und dem rohrförmigen Ventilkörper 2 jeweils Balgdichtungen 16 und 17 angeordnet sind, sodaß die Führungselemente 14 und 15 lediglich zur Führung, nicht aber notwendigerweise zur Dichtung, dienen müssen. Im Bereich der Balgdichtung 16 weist das Gehäuse eine Entlastungsbohrung 25 auf.

Zwischen den beiden Balgdichtungen 16 und 17 ist der Ventilkörper mit einem radialen Flansch 18 ausgebildet, welcher über eine Dichtung 19 dichtend nach Art eines Kolbens im Gehäuse 1 geführt ist. Wenn der Raum 20 des Gehäuses 1 über eine Fluidleitung 21 mit Druckmittel beaufschlagt wird, kann der radiale Flansch 18 entsprechend in Richtung des Doppelpfeiles 6 aufwärtsbewegt werden, wobei in diesem Falle bei der Darstellung nach Fig. 1 eine Feder 22 komprimiert wird. Das Ventil nach Fig. 1 ist somit bei druckloser Fluidleitung 21 in der Offenstellung, wobei selbstverständlich die Position der Feder und der Fluidleitung 21 relativ zum radialen Flansch 18 vertauscht werden kann.

An der der Feder 22 diametral gegenüberliegenden Stelle des Hochdruckschieberventiles ist in Fig. 1 eine abgewandelte Ausbildung des Antriebes ersichtlich, wobei hier vier elektrochemische Aktoren 23 mit dem radialen Flansch 18 zusammenwirken, um auf diese Weise die axiale Verschiebung des Ventilkörpers 2 in Richtung des Doppelpfeiles 6 zu ermöglichen.

Das in Fig. 1 mit II bezeichnete Teil ist in Fig. 2 vergrößert dargestellt. In Fig. 2 ist ersichtlich, daß der radiale Flansch 18 des Ventilkörpers 2 geteilt ausgebildet ist, wobei zwischen den beiden Teilen des radialen Flansches 18 isolierende Elemente 24 vorgesehen sind. Insbesondere dann, wenn der radiale Flansch 18 unmittelbar mit Fluid beaufschlagt wird, dessen Temperatur von der Temperatur des Mediums im Ventil wesentlich verschieden ist, gelingt es auf diese Art und Weise den Ventilkörper vom Stellantrieb thermisch zu trennen bzw. zu isolieren.

## Patentansprüche

1. Axial durchströmtes Hochdruckschieberventil mit einem rohrförmigen Ventilkörper (2) mit radialen Durchbrechungen (5) für den Durchtritt von Medium in geöffneter Stellung des Ventiles, wobei der rohrförmige Ventilkörper (2) in axialer Richtung verschiebbar in einem Gehäuse (1) geführt ist, **dadurch gekennzeichnet, daß** der Ventilkörper (2) in axialem Abstand von dem die radialen Durchbrechungen (5) tragenden Endbereich einen zur Achse symmetrisch angeordneten Ventilkegel (4) mit konischer Dichtfläche trägt, daß der die radialen Durchbrechungen (5) tragende Endbereich des rohrförmigen Ventilkörpers (2) in eine Hülse (7) mit geschlossenem Boden (8) eintauchend geführt ist, wobei die Hülse (7) an der dem Ventilkegel (4) zugewandten Mantelstirnfläche einen konischen Ventilsitz (10) trägt, welcher mit der konischen Dichtfläche des Ventilkegels (4) zusammenwirkt, und daß die Dichtung zwischen dem Ventilkörper (2) und dem Gehäuse (1) als Balgdichtung ausgebildet ist.

2. Axial durchströmtes Hochdruckschieberventil nach Anspruch 1, **dadurch gekennzeichnet, daß** der Ventilkörper (2) einen radialen Flansch (18) für den Angriff eines, insbesondere fluidbetriebenen, Stellantriebes trägt.

3. Axial durchströmtes Hochdruckschieberventil nach Anspruch 2, **dadurch gekennzeichnet, daß** der Ventilkörper (2) in axialer Richtung zu beiden Seiten des Flansches (18) je eine dichtend mit dem Ventilkörper (2) und dem Gehäuse (1) verbundene Balgdichtung (16,17) trägt.

4. Axial durchströmtes Hochdruckschieberventil nach Anspruch 2 oder 3, **dadurch gekennzeichnet, daß** der Flansch (18) unter Zwischenschaltung einer Feder (22) am Gehäuse (1) abgestützt ist.

5. Axial durchströmtes Hochdruckschieberventil nach einem der Ansprüche 2 bis 4, **dadurch gekennzeichnet, daß** der Flansch (18) unter Zwischenschaltung eines thermischen Isolators (24) mit dem Stellantrieb bzw. der Feder (22) verbunden ist.

6. Axial durchströmtes Hochdruckschieberventil nach einem der Ansprüche 1 bis 5, **dadurch gekennzeichnet, daß** das Gehäuse (1) im Bereich der Balgdichtungen (16,17) Entlastungsbohrungen (25) aufweist.

7. Axial durchströmtes Hochdruckschieberventil nach einem der Ansprüche 2 bis 6, **dadurch gekennzeichnet, daß** zwischen dem Flansch (18) und den Balgdichtungen (16,17) im Gehäuse (1) dichtende ringförmige Führungen (14,15) für den Ventilkörper (2) angeordnet sind.

8. Axial durchströmtes Hochdruckschieberventil nach einem der Ansprüche 1 bis 7, **dadurch gekennzeichnet, daß** die Hülse (7) mit geschlossenem Boden (8) in einer mit dem Gehäuse (1) verbundenen Scheibe angeordnet ist, welche radial außerhalb des Mantels (9) der Hülse (7) axiale Durchbrechungen (12) aufweist.

9. Axial durchströmtes Hochdruckschieberventil nach einem der Ansprüche 2 bis 8, **dadurch gekennzeichnet, daß** der Flansch (18) dichtend in einer den Ventilkörper (2) umgebenden Kammer geführt ist, an welche eine Fluidleitung zum axialen Verstellen des Ventilkörpers (2) angeschlossen ist.

10. Axial durchströmtes Hochdruckschieberventil nach einem der Ansprüche 2 bis 8, **dadurch gekennzeichnet, daß** der Stellantrieb von zu beiden Seiten des Flansches (18) wirkenden elektrochemischen Aktoren (23) gebildet ist.

## Claims

1. An axial-flow high-pressure sliding valve including a tubular valve body (2) having radial openings (5) for the passage of medium in the opened position of the valve, said tubular valve body (2) being guided in a casing (1) so as to be displaceable in the axial direction, **characterized in that** the valve body (2), at an axial distance from the end region carrying the radial openings (5), carries a valve cone (4) arranged symmetrically with respect to the axis and having a conical sealing surface, that the end region of the tubular valve body (2), which carries the radial passages (5) is guided so as to reach into a sleeve (7) having a closed bottom (8), wherein the sleeve (7), on its jacket end face facing the valve cone (4), carries a conical valve seat (10) cooperating with the conical sealing surface of the valve cone (4), and that the seal provided between the valve body (2) and the casing (1) is designed as a bellows seal.

2. An axial-flow high-pressure sliding valve according to claim 1, **characterized in that** the valve body (2) carries a radial flange (18) for the application of an actuating drive and, in particular, fluid-operated actuating drive.

3. An axial-flow high-pressure sliding valve according to claim 2, **characterized in that** the valve body (2) carries on both sides of the flange (18), viewed in the axial direction, one bellows seal (16, 17) each, which is sealingly connected with the valve body (2) and the casing (1).

4. An axial-flow high-pressure sliding valve according to claim 2 or 3, **characterized in that** the flange (18) is supported on the casing (1) with a spring (22) being interposed.

5. An axial-flow high-pressure sliding valve according to any one of claims 2 to 4, **characterized in that** the flange (18) is connected to the actuating drive and spring (22), respectively, with a thermal insulator (24) being interposed.

6. An axial-flow high-pressure sliding valve according to any one of claims 1 to 5, **characterized in that** the casing (1) comprises relief bores (25) in the region of the bellows seals (16, 17).

7. An axial-flow high-pressure sliding valve according to any one of claims 2 to 6, **characterized in that** annular sealing guides (14, 15) for the valve body (2) are arranged in the casing (1) between the flange (18) and the bellows seals (16, 17).

8. An axial-flow high-pressure sliding valve according to any one of claims 1 to 7, **characterized in that** the sleeve (7) having a closed bottom (8) is arranged in a disc connected with the casing (1) and including axial openings (12) radially outside the jacket (9) of the sleeve (7).

9. An axial-flow high-pressure sliding valve according to any one of claims 2 to 8, **characterized in that** the flange (18) is sealingly guided in a chamber surrounding the valve body (2) and to which a fluid duct is connected for the axial displacement of the valve body (2).

10. An axial-flow high-pressure sliding valve according to any one of claims 2 to 8, **characterized in that** the actuating drive is comprised of electrochemical actuators (23) acting on both sides of the flange (18).

## Revendications

1. Soupape haute pression à tiroir à écoulement axial comportant un corps de soupape (2) de forme tubulaire avec des ajours (5) radiaux pour le passage d'un fluide en position ouverte de la soupape, le corps de soupape (2) de forme tubulaire étant guidé dans la direction axiale de manière à pouvoir coulisser dans un boîtier (1), **caractérisée en ce que** le corps de soupape (2) porte, à distance axiale de la zone d'extrémité portant les ajours (5) radiaux, un cône de soupape (4) disposé symétriquement par rapport à l'axe avec surface d' étanchéité conique, **en ce que** la zone d'extrémité portant les ajours (5) radiaux du corps de soupape (2) de forme tubulaire est guidée de manière à pénétrer dans un manchon (7) à fond (8) fermé, le manchon (7) portant, sur la face frontale de paroi tournée vers le cône de soupape (4), un siège de soupape (10) conique qui coopère avec la surface d'étanchéité conique du cône de soupape (4), et **en ce que** l'étanchéité entre le corps de soupape (2) et le boîtier (1) est réalisée sous la forme d'un joint à soufflet.

2. Soupape haute pression à tiroir à écoulement axial selon la revendication 1, **caractérisée en ce que** le corps de soupape (2) porte une bride (18) radiale pour l'action d'un mécanisme de réglage, actionné en particulier par un fluide.

3. Soupape haute pression à tiroir à écoulement axial selon la revendication 2, **caractérisée en ce que** le corps de soupape (2) porte dans la direction axiale, sur chacun des deux côtés de la bride (18), un joint à soufflet (16, 17) relié de manière étanche au corps de soupape (2) et au boîtier (1).

4. Soupape haute pression à tiroir à écoulement axial selon la revendication 2 ou 3, **caractérisée en ce que** la bride (18) est soutenue sur le boîtier (1) avec interposition d'un ressort (22).

5. Soupape haute pression à tiroir à écoulement axial selon l'une des revendications 2 à 4, **caractérisée en ce que** la bride (18) est reliée, avec interposition d'un isolant thermique (24), au mécanisme de réglage ou au ressort (22).

6. Soupape haute pression à tiroir à écoulement axial selon l'une des revendications 1 à 5, **caractérisée en ce que** le boîtier (1) présente des trous de détente (25), dans la zone des joints à soufflet (16, 17).

7. Soupape haute pression à tiroir à écoulement axial selon l'une des revendications 2 à 6, **caractérisée en ce que** des guides (14 ; 15) annulaires d'étanchéité destinés au corps de soupape (2) sont disposés dans le boîtier (1), entre la bride (18) et les joints à soufflet (16, 17).

8. Soupape haute pression à tiroir à écoulement axial selon l'une des revendications 1 à 7, **caractérisée en ce que** le manchon (7) avec fond (8) fermé est disposé dans un disque relié au boîtier (1), lequel présente des ajours (12) axiaux radialement, à l'extérieur de la paroi (9) du manchon (7).

9. Soupape haute pression à tiroir à écoulement axial selon l'une des revendications 2 à 8, **caractérisée en ce que** la bride (18) est guidée de manière étanche dans une chambre entourant le corps de soupape (2), à laquelle est raccordée une conduite de fluide pour le déplacement axial du corps de soupape (2).

10. Soupape haute pression à tiroir à écoulement axial selon l'une des revendications 2 à 8, **caractérisée en ce que** le mécanisme de réglage est formé par des actionneurs (23) électrochimiques agissant des deux côtés de la bride (18).
